**Europäisches Patentamt**

**European Patent Office**

**Office européen des brevets**

(19)

(11) Veröffentlichungsnummer: **0 255 571**
**B1**

(12) **EUROPÄISCHE PATENTSCHRIFT**

(45) Veröffentlichungstag der Patentschrift:
22.08.90

(51) Int. Cl.⁵: **F16H 57/08**

(21) Anmeldenummer: **87105772.5**

(22) Anmeldetag: **18.04.87**

(54) Anlaufscheibenanordnung, insbesondere für Planetenräder in einem Planetenradträger.

(30) Priorität: **05.07.86 DE 3622671**

(43) Veröffentlichungstag der Anmeldung:
**10.02.88 Patentblatt 88/6**

(45) Bekanntmachung des Hinweises auf die Patenterteilung:
**22.08.90 Patentblatt 90/34**

(84) Benannte Vertragsstaaten:
**DE FR GB IT SE**

(56) Entgegenhaltungen:
EP-A- 0 054 852
DE-C- 3 502 076
FR-A- 2 346 597
FR-A- 2 371 616
US-A- 3 635 535

(73) Patentinhaber: **FORD-WERKE AKTIENGESELLSCHAFT,**
**Werk Köln-Niehl Henry-Ford-Strasse Postfach 60 40 02,**
**D-5000 Köln 60(DE)**
(84) Benannte Vertragsstaaten: **DE IT SE**

(73) Patentinhaber: **FORD MOTOR COMPANY LIMITED,**
**Eagle Way, Brentwood Essex CM13 3BW(GB)**
(84) Benannte Vertragsstaaten: **GB**

(73) Patentinhaber: **FORD FRANCE SOCIETE ANONYME,**
**344 Avenue Napoléon Bonaparte B.P. 307, F-92506 Rueil**
**Malmaison Cedex(FR)**
(84) Benannte Vertragsstaaten: **FR**

(72) Erfinder: **Premiski, Valdimir, Fliederstrasse 23,**
**D-5358 BAM-Willerscheid(DE)**
Erfinder: **Premiski, Claudia, Fliederstrasse 23,**
**D-5358 BAM-Willerscheid(DE)**
Erfinder: **Wehren, Wilhelm, Fichtenpfad 15,**
**D-5014 Kerpen 6(DE)**

(74) Vertreter: **Ritzkowsky, Harald, Dipl.-Ing., Ford-Werke**
**Aktiengesellschaft Patentabteilung NH/DRP**
**Henry-Ford-Strasse, D-5000 Köln 60(DE)**

## Beschreibung

Die Erfindung bezieht sich auf eine Anlaufscheibenanordnung, insbesondere für Planetenräder in einem Planetenradträger, der im Oberbegriff des Patentanspruches erläuterten Art.

Aus der EP-A 0 054 852 ist eine Anlaufscheibenanordnung, insbesondere für Planetenräder in einem Planetenradträger bekannt, bei der die je zwei zu beiden Seiten von auf im Planetenradträger festgelegten Planetenradbolzen über eine Nadellageranordnungen drehbar gelagerten Planetenrädern angeordneten Anlaufscheiben an ihren Innenumfängen mit versetzt angeordneten Ausnehmungen zur Schmierölversorgung der Lageranordnung versehen sind.

Bei dieser bekannten Anlaufscheibenanordnung müssen weiterhin an inneren Wandungsteilen des Planetenradträgers konische Leitflächen und radiale Leitkanäle eingearbeitet werden um Schmieröl bis zu den Ausnehmungen an den Innen-Umfängen der Anlaufscheiben zu führen. Siehe hierzu Figuren 5 und 9 der europäischen Patentanmeldung.

Die bekannte Anlaufscheibenanordnung weist jedoch den Nachteil auf, daß durch die axiale Wanderung der üblicherweise schrägverzahnten Planetenräder bei von Zug- in Schubbetrieb wechselnder Belastung die nicht unterbrochenen Außenumfänge der beiden Anlaufscheiben einer Seite derart eng aneinandergepreßt werden, daß ein Durchspülen der Lageranordnung mit Schmieröl nicht auftreten kann, wodurch die erwünschte Kühlung und verbesserte Schmierung zumindest in einer Belastungsrichtung nicht erreichbar ist.

Die am Planetenradträger vorzusehenden konischen Leitflächen und radialen Leitkanäle erfordern darüber hinaus eine zusätzliche aufwendige Bearbeitung.

Aus der DE-C 35 02 076 der Anmelderin ist bereits eine Anlaufscheibe, insbesondere für Planetenräder in einem Planetenradträger bekannt, bei der durch an ihrem Außenumfang angeordnete, diametral gegenüberliegende, sektorförmige Ausschnitte von etwa 110° Winkelerstreckung sichergestellt wird, daß deren Scheitel Schmieröl zur La geranordnung der Planetenräder führen, ohne daß hierfür im Planetenradträger konische Leitflächen oder radiale Leitkanäle bearbeitet werden müssen.

Die Aufgabe der Erfindung ist es, eine Anlaufscheibenanordnung, insbesondere für Planetenräder in einem Planetenradträger, der im Oberbegriff des Patentanspruches erläuterten Art derart zu verbessern, daß bei einem Planetenradträger, bei dem in einem bestimmten Betriebszustand Drehzahlen der Planetenräder bis zu 16.000 U/min. auftreten können, eine absolut zuverlässige Schmierung und Kühlung der mit halber Drehzahl umlaufenden Nadeln der Nadellageranordnung erzielt wird.

Gemäß der Erfindung wird diese Aufgabe gelöst, indem eine Anlaufscheibenanordnung, insbesondere für Planetenräder in einem Planetenradträger, der im Oberbegriff des Patentanspruches erläuterten Art, die im Kennzeichenteil aufgezeigte Kombination von zum Teil bekannten Merkmale aufweist.

Dadurch, daß außenliegende Anlaufscheiben an ihren Außenumfängen mit diametral gegenüberliegenden, sektorförmigen Ausschnitten von etwa 110° Winkelerstreckung versehen sind, deren Scheitel Schmieröl zur Lageranordnung führen, nach Patent 35 02 076 und dadurch daß innenliegende Anlaufscheiben eine Vielzahl von auf einem Kreis außerhalb des Anlaufkreises der Nadeln der Nadellageranordnung angeordnete, am Umfang ungleichförmig verteilte Bohrungen aufweisen, derart, daß in jeder relativen Lage der äußeren und inneren Anlaufscheiben jeweils nur eine Verbindung zwischen einem der beiden Scheitel an der äußeren Anlaufscheibe und einer Bohrung in der inneren Anlaufscheibe sichergestellt ist, wird bei einer axialen Verlagerung der Planetenräder an der Seite, an der die beiden Anlaufscheiben aneinandergepreßt werden, durch die in dichter Folge vorbeilaufenden Nadeln der Nadellageranordnung ein Pumpeffekt erzielt, der Schmieröl in den Bereich der Nadellageranordnung ständig hineinsaugt, das dann an der anderen Seite der Planetenräder, an der kein Aneinanderpressen der Anlaufscheiben stattfindet, austreten kann.

Dadurch, daß zu beiden Seiten der Planetenräder eine solche kombinierte Anlaufscheibenanordnung vorgesehen ist, wird sowohl bei Zug- als auch bei Schubbelastung eine solche Pumpwirkung sichergestellt, wobei lediglich die Förderrichtung des Schmieröls umgeändert wird, sie jedoch jeweils von der angepreßten Anlaufscheibenanordnung zur lose laufenden Anlaufscheibenanordnung gerichtet ist.

Durch die relative Verdrehung der beiden Anlaufscheiben zueinander wird bewirkt, daß Öleinbzw. -austritt, ständig um 180° versetzt erfolgt, wodurch zusätzlich eine gleichmäßigere Schmierung des Gesamtumfanges der Nadellageranordnung erreicht wird.

Dadurch, daß die beiden Anlaufscheiben in ihrer Form deutlich voneinander abweichen, ist bei der Montage einfacher sicherzustellen, daß die richtige Reihenfolge der Anlaufscheiben bei der Montage eingehalten wird und diese Reihenfolge kann auch durch Sichtkontrolle bei bereits montierten Anlaufscheiben überprüft werden.

Bei der bekannten Anlaufscheibenanordnung gemäß der europäischen Patentanmeldung ist eine Verwechslungsgefahr wesentlich größer und eine Sichtkontrolle bei bereits montierten Anlaufscheiben nicht möglich.

Die Erfindung wird anhand eines in der beiliegenden Zeichnung gezeigten Ausführungsbeispieles näher erläutert. Es zeigt:

Figur 1 einen vertikalen Schnitt durch eine Planetenradlagerung in einem Planetenradträger mit einer Anlaufscheibenanordnung der Erfindung bei Zugbelastung;

Figur 2 einen vertikalen Schnitt durch die Planetenradlageranordnung nach Figur 1 bei Schubbelastung und

Figur 3 eine Ansicht der jeweils belasteten Anlaufscheibenanordnungen in Richtung der Pfeile III in den Figuren 1 bzw. 2.

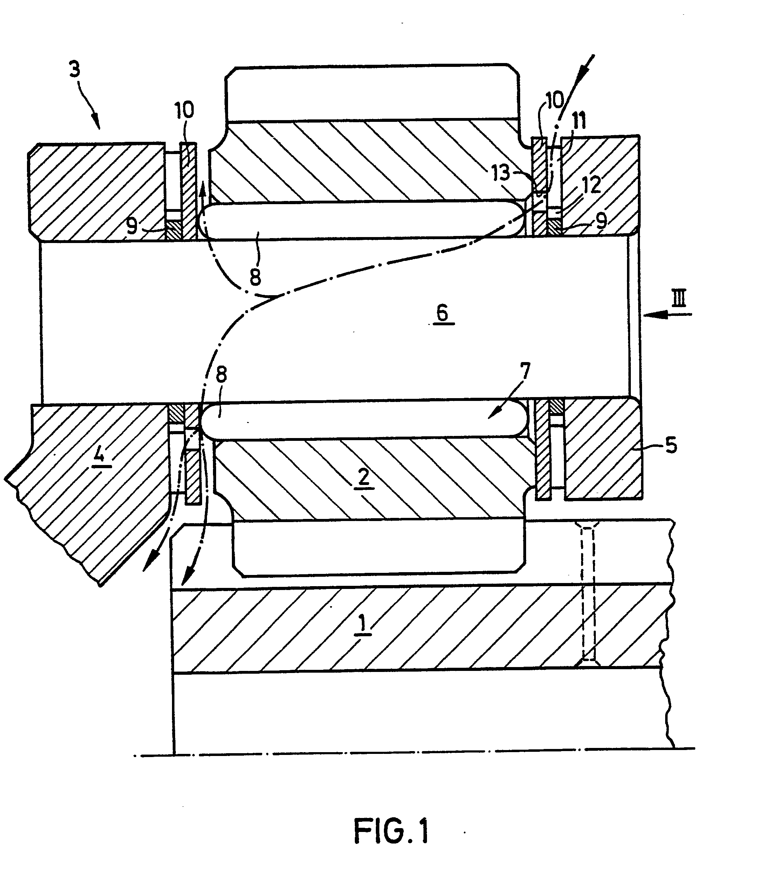

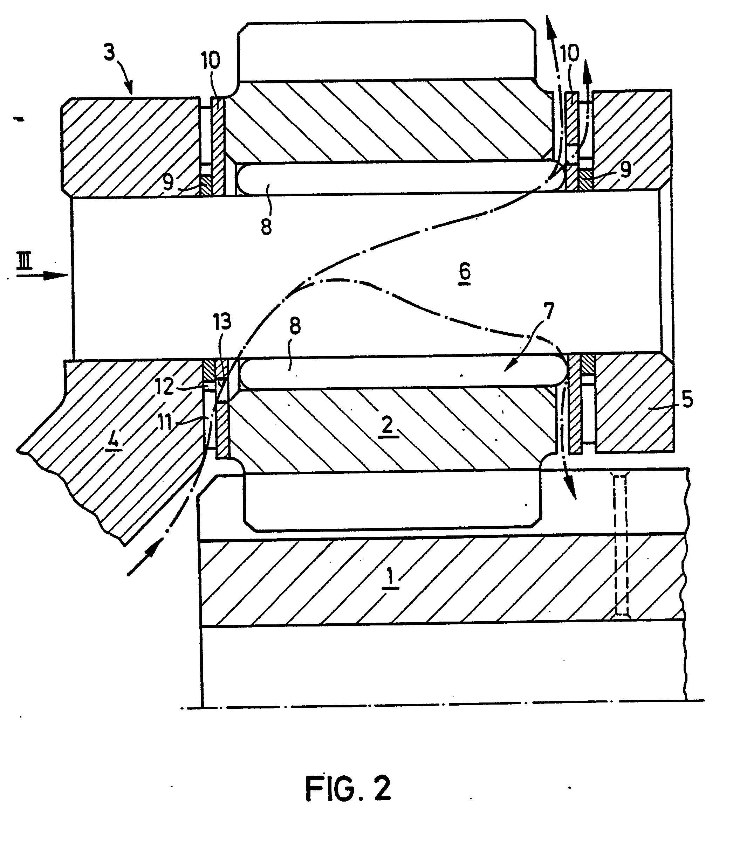

Bei den in den Figuren 1 und 2 gezeigten Teilschnitten durch eine Planetenradlageranordnung ist ein Sonnenrad 1 angedeutet, mit dem ein Planetenrad 2 in Eingriff steht.

Das Planetenrad 2 ist in einem Planetenradträger 3 mit weiteren Planetenrädern (nicht gezeigt) drehbar gelagert.

Der Planetenradträger 3 besteht in üblicher Weise aus einer Planetenradträgernabe 4 und einem Planetenradträgerkorb 5, die miteinander im Abstand verbunden sind und zwischen sich Planetenradbolzen 6 festgelegt aufnehmen.

Das Planetenrad 2 ist auf dem Planetenradbolzen 6 über eine Nadellageranordnung 7 drehbar gelagert, die normalerweise ohne Innen- und Außenlaufring und ohne Nadelkäfig nur durch eine Vielzahl von aufeinanderfolgenden Nadeln 8 ausgeführt ist.

Zu beiden Seiten des Planetenrades 2 sind jeweils eine äußere Anlaufscheibe 9 und eine innere Anlaufscheibe 10 angeordnet.

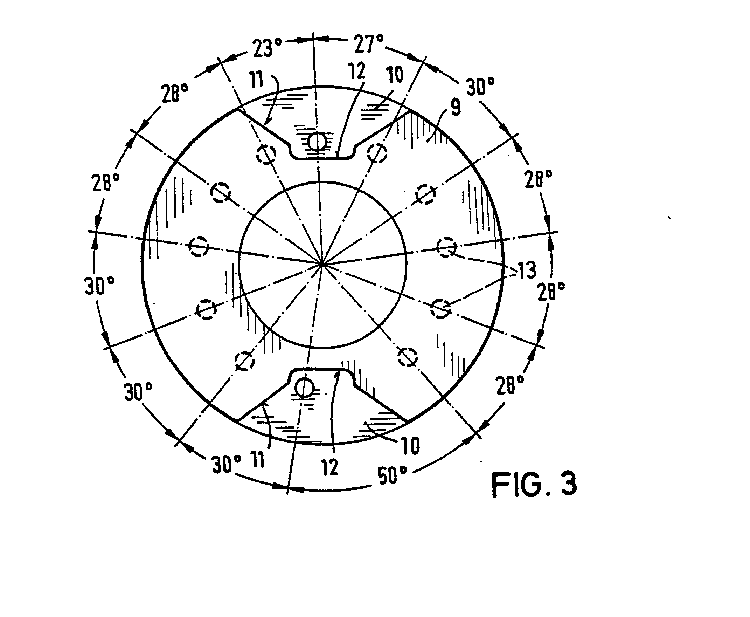

Wie aus Figur 3 ersichtlich ist, weisen die außenliegenden Anlaufscheiben 9 an ihrem Außenumfang zwei diametral gegenüberliegende, sektorförmige Ausschnitte 11 von etwa 110° Winkelerstreckung auf, deren Scheitel 12 ausgerundet sind und bestehend aus einem Lagermaterial wie z.B. Bronze, Aluminium usw.

Die innenliegenden Anlaufscheiben 10 weisen hierbei eine Vielzahl von auf einem Kreis außerhalb des Anlaufkreises der Nadeln 8 der Nadellageranordnung 7 angeordneten, am Umfang ungleichförmig verteilten Bohrungen 13 auf und bestehen aus einem gehärteten Material.

Bei der in Figur 1 gezeigten Zugbelastung verlagert sich das Planetenrad 2 axial nach rechts und preßt die beiden Anlaufscheiben 9 und 10 gegeneinander. Über die sektorförmigen Ausschnitte 11 in der außenliegenden Anlaufscheibe 9 und deren Scheitel 12 kann Schmieröl zu den Bohrungen 13 in der innenliegenden Anlaufscheibe 10 gelangen. Dabei muß festgehalten werden, daß die außenliegende Anlaufscheibe 9 dazu neigt, sich am Planetenradträgerkorb 5 festzusetzen und die innenliegende Anlaufscheibe 10 dazu neigt, mit dem Planetenrad 2 umzulaufen. Das heißt, eine Gleitbewegung tritt in erster Linie zwischen den beiden Anlaufscheiben auf. Die Bohrungen 13 der innenliegenden Anlaufscheibe 10 laufen daher immer wieder an den Ausschnitten 11 und Scheiteln 12 der außenliegenden Anlaufscheibe 9 vorbei und nehmen Schmieröl auf, wobei die innen an der innenliegenden Anlaufscheibe 10 umlaufenden Nadeln 8 der Nadellageranordnung 7 durch ihre unterschiedlichen Volumen zwischen ihren abgerundeten Enden den Saugeffekt noch verstärken, da sie sich entgegengesetzt zur axialen Verlagerung des Planetenrades 2 axial nach links verlagern und hier die beiden Anlaufscheiben 9 und 10 vom Planetenrad 2 abdrücken, wodurch ein freier Austritt des Schmieröls wie durch die Strich-Punkt-Pfeile eingezeichnet möglich ist.

Bei der in Figur 2 gezeigten Schubbelastung verlagert sich das Planetenrad 2 nach links und preßt hier die beiden Anlaufscheiben 9 und 10 gegeneinander. Die Nadeln 8 der Nadellageranordnung 7 verlagern sich hierbei, wie gezeigt, in entgegengesetzter axialer Richtung. Das durch Strich-Punkt-Pfeile angedeutete Schmieröl kann wieder über die in der außenliegenden Anlaufscheibe 9 vorgesehenen Ausschnitte 11 und Scheitel 12 in die Bohrungen 13 in der innenliegenden Anlaufscheibe 10 gelangen und nach im wesentlichen axialer Durchströmung der Lageranordnung 7 radial zwischen dem Planetenrad 2 und den abgerückten entlasteten Anlaufscheiben austreten.

Die zwischen der außenliegenden Anlaufscheibe 9 und der innenliegenden Anlaufscheibe 10 auftretende Saugwirkung ist in etwa auch durch den Effekt zu beschreiben, der als sogenannter Sireneneffekt bekannt ist.

**Patentansprüche**

1. Anlaufscheibenanordnung, insbesondere für Planetenräder (2) in einem Planetenradträger (3), die aus je zwei zu beiden Seiten von auf im Planetenradträger (3) festgelegten Planetenradbolzen (6) über eine Nadellageranordnung (7) drehbar gelagerten Planetenrädern (2) angeordneten Anlaufscheiben (9, 10) besteht, die mit Ausnehmungen (11, 13) zur Schmierölversorgung der Lageranordnung (7) versehen sind, **gekennzeichnet durch** die Kombination folgender zum Teil bekannter Merkmale:

a) Eine außenliegende Anlaufscheibe (9) ist an ihrem Aussenumfang mit diametral gegenüberliegenden, sektorförmigen Ausschnitten (11) von etwa 110° Winkelstrekkung versehen, deren Scheitel (12) abgerundet sind und Schmieröl zur Lageranordnung (7) führen, und

b) eine innenliegende Anlaufscheibe (10) weist eine Vielzahl von auf einem Kreis außerhalb des Anlaufkreises der Nadeln (8) der Nadellageranordnung (7) angeordneten, am Umfang ungleichmäßig verteilten Bohrungen (13) auf, derart, daß in jeder relativen Lage der äusseren und inneren Anlaufscheiben (9 und 10) jeweils nur eine Verbindung zwischen einem der beiden Scheitel (12) an der äußeren Anlaufscheibe (9) und einer vollen Bohrung (13) in der inneren Anlaufscheibe (10) sichergestellt ist.

**Claims**

1. A thrust washer arrangement, in particular for planet gears (2) in a planet gear carrier (3), which comprises two thrust washers (9, 10) in each case which are disposed on both sides of planet gears (2) mounted rotatably by way of a needle bearing arrangement (7) on planet gear pins (6) secured in the planet gear carrier (3) and which are provided with recesses (11, 13) for supplying lubricating oil to the bearing arrangement (7), characterized by the combination of the following partly known features:

a) an external thrust washer (9) is provided on its outer periphery with diametrically opposite, sector-shaped recesses (11) of approximately 110° angular extension, the apices (12) of which are rounded and guide lubricating oil to the bearing arrangement (7), and

b) an inner thrust washer (10) comprises a plurality of bores (13) provided on a circle outside the thrust circle of the needles (8) of the needle-bearing arrangement (7) and distributed non-uniformly over the periphery, in such a way that in each relative position of the outer and inner thrust washers (9 and 10) only one connexion is ensured in each case between one of the two apices (12) on the outer thrust washer (9) and a complete bore (13) in the inner thrust washer (10).

## Revendications

1. Disposition de disques de démarrage, en particulier pour des pignons satellites (2) dans un porte-satellites (3), comprenant deux disques respectifs de démarrage (9, 10) qui sont agencés de part et d'autre de pignons satellites (2) montés à rotation, par l'intermédiaire d'un ensemble de roulement (7) à aiguilles, sur des axes (6) de satellites verrouillés à demeure dans le porte-satellites (3), et qui sont munis d'évidements (11, 13) pour alimenter l'ensemble de roulement (7) en huile de lubrification, caractérisée par la combinaison des particularités suivantes, en partie connues:

a) un disque extérieur de démarrage (9) est pourvu, sur son pourtour externe, d'échancrures (11) diamétralement opposées qui sont configurées en des secteurs, présentent une étendue angulaire d'environ 110°, et dont les sommets (12) sont arrondis et acheminent de l'huile de lubrification vers l'ensemble de roulement (7), et

b) un, disque intérieur de démarrage (10) comporte un grand nombre de perçages (13) qui sont irrégulièrement répartis sur le pourtour et sont agencés, sur une circonférence, à l'extérieur de la circonférence d'attaque des aiguilles (8) de l'ensemble de roulement (7) à aiguilles, de telle sorte que, dans chaque position relative des disques extérieur et intérieur de démarrage (9 et 10), seule soit respectivement établie une liaison entre l'un des deux sommets (12), sur le disque extérieur de démarrage (9), et un perçage intégral (13) dans le disque intérieur de démarrage (10).

FIG.1

FIG. 2

FIG. 3